# EUROPEAN PATENT APPLICATION

(11) **EP 4 450 931 A1**
(43) Date of publication of application: **23.10.2024**
(21) Application number: 22907395.2
(22) Date of filing: 12.12.2022
(51) Int. Cl.: G01H 3/06, G05B 23/02, G01N 29/036, G06Q 50/00, C02F 3/12

(54) **WATER TREATMENT PLANT OPERATION MANAGEMENT SUPPORT SYSTEM AND OPERATION MANAGEMENT SUPPORT METHOD**

(30) Priority: 13.12.2021 JP 2021201449
(71) Applicant: Sanki Engineering Co., Ltd, Tokyo 1048506 (JP)
(72) Inventor: SHIBATA, Kazue, Tokyo 104-8506 (JP); SUZUKI, Issei, Tokyo 104-8506 (JP)
(74) Representative: SONN Patentanwälte GmbH & Co KG
(86) International application number: PCT/JP2022/045589
(87) International publication number: WO 2023/112871

(57) **Abstract**

An operation management support system for a water treatment plant includes an air supply pipe through which air or oxygen is delivered from an air blower, an air diffuser which is connected to the air supply pipe and to which the air or the oxygen is supplied from the air supply pipe, a treatment water tank in which the air diffuser is arranged in treatment water and the air or the oxygen is released into the water from the air diffuser, a vibration information collection device that collects vibration information produced by bubbles which are formed in the water by the air or the oxygen, the air or the oxygen being released from the air diffuser, in the treatment water tank, and an information processing device which performs predetermined information processing for the vibration information collected by the vibration information collection device, and the information processing device includes a vibration information obtainment unit which obtains the vibration information from the vibration information collection device and performs predetermined transform processing for the obtained vibration information, a determination algorithm execution unit which executes processing based on a predetermined determination algorithm for the vibration information for which the predetermined transform processing is performed by the vibration information obtainment unit, a vibration information determination unit which makes a determination about an abnormality of the air diffuser based on an output result output from the determination algorithm execution unit, and a determination result notification unit which notifies a result of a determination by the vibration information determination unit.

## Description

### Technical Field

The present invention relates to water treatment plant operation management support system and operation management support method.

### Background Art

In related art, in a sewage treatment or waste water treatment facility (hereinafter, also referred to as "sewage or waste water treatment plant" or simply as "water treatment plant"), an activated sludge method has widely been used in which water quality purification is performed by using aerobic microbes in a treatment water tank (aeration tank). In a water treatment plant in which the activated sludge method is used, in order to dissolve air and oxygen necessary for respiration of the aerobic microbes which decompose organic substances into water, an air diffuser is in general used (for example, see PTL 1).

### Citation List

### Patent Literature

### [PTL 1] JP 2011-230068 A

### Summary of the Invention

### Problems to be Solved by the Invention

In a water treatment plant, air or oxygen is delivered to an air diffuser by an air blower or the like, and air or oxygen released into water by the air diffuser becomes bubbles and is diffused into water. As for the bubbles diffused into water, the bubble with a smaller diameter has a larger specific surface area and can cause more oxygen to be dissolved in water. Further, the diffused bubbles are uniformly dispersed in an aeration tank, have a long retention time in the tank, and can thereby cause more oxygen to be dissolved in water.

However, when the air diffuser is damaged due to causes such as degradation and external forces, a large amount of bubbles with large diameters (coarse bubbles) might be produced from a part of the air diffuser. In a case where the coarse bubbles are produced, because the diameters of the bubbles are large, dissolution efficiency of oxygen is lowered. Further, because a large amount of bubbles are released from a part into the tank, a deviation occurs to a bubble distribution in the tank, the retention time of the bubbles becomes short, and the dissolution efficiency of oxygen is thus significantly lowered.

Further, an operation (air delivery) of the air diffuser might temporarily be suspended for performance maintenance, an inspection, and so forth. In a case where air delivery of air or oxygen is stopped in a state where the air diffuser has degradation or damage, dirty water containing solid bodies might flow backward from a damaged part through the air diffuser or an air delivery pipe and reach a normal air diffuser. When dirty water enters an internal portion of the air diffuser a plurality of times, the air diffuser is occluded by solid bodies from its internal portion and thereby becomes unable to normally produce bubbles. In this case, because purification of sewage or waste water becomes insufficient, the air diffuser which dirty water has entered is required to be replaced.

Further, an aeration tank having many air diffusers is used in a sewage or waste water treatment plant (water treatment plant), and checks or the like of the coarse bubbles are usually performed by visual observation in daily inspections of the aeration tank. However, there are many cases where an upper portion of the aeration tank is covered by a concrete slab or a cover lid and an opening of the aeration tank is small for reduction of an odor given off from sewage or waste water and for prevention of a fall into the tank, and so forth, it is difficult to look out over a whole aeration water surface of the aeration tank in the daily inspections, and it is difficult to even check abnormal bubbles by visual observation at a water level in an operation state. Thus, it is difficult to find damage to the air diffuser by visual observation in the daily inspections, and there are many cases where an occurrence of damage to the air diffuser is not noticed.

Thus, only after there is concern about damage due to an increase in a blown air amount by the air blower, deterioration of water quality of treatment water, or the like, the water level is lowered to a position around an upper surface of the air diffuser by drawing out dirty water from the aeration tank, and checking work by visual observation is performed about abnormal bubbling such as the coarse bubbles, damage to the air diffuser, and so forth. In this case, because a long-term operation has already been performed while the air diffuser is damaged and dirty water has often already entered, from a damaged part, internal portions of other normal air diffusers in the same section, the air diffuser is found which is assessed to be unusable due to occlusion with dirt, and replacement of the air diffuser cannot be avoided.

Further, because a dirty water treatment in the concerned system has to be stopped for lowering the water level, a load in operation management is large. In addition, it is difficult for an ordinary facility manager (user) to assess production of the coarse bubbles (abnormal bubbling), damage to the air diffuser, and so forth, and a technician from a provider of the air diffuser has to visit the site and perform checking work.

Accordingly, an object of the present disclosure is to provide a technique in which an ordinary facility manager is enabled to detect an abnormality of an air diffuser in an operation of a water treatment plant.

### Means for Solving the Problems

An operation management support system for a water treatment plant according to one aspect includes: an air supply pipe through which air or oxygen is delivered from an air blower; an air diffuser which is connected to the air supply pipe and to which the air or the oxygen is supplied from the air supply pipe; a treatment water tank in which the air diffuser is arranged in treatment water and the air or the oxygen is released into the water from the air diffuser; and a vibration information collection device that collects vibration information produced by bubbles which are formed in the water by the air or the oxygen, the air or the oxygen being released from the air diffuser, in the treatment water tank; and an information processing device which performs predetermined information processing for the vibration information collected by the vibration information collection device, and the information processing device includes a vibration information obtainment unit which obtains the vibration information from the vibration information collection device and performs predetermined transform processing for the obtained vibration information, a determination algorithm execution unit which executes processing based on a predetermined determination algorithm for the vibration information for which the predetermined transform processing is performed by the vibration information obtainment unit, a vibration information determination unit which makes a determination about an abnormality of the air diffuser based on an output result output from the determination algorithm execution unit, and a determination result notification unit which notifies a result of a determination by the vibration information determination unit.

Note that in the operation management support system for a water treatment plant according to one aspect, the vibration information collection device may be arranged in a space in an upper portion of the treatment water in the treatment water tank.

Further, in the operation management support system for a water treatment plant according to one aspect, the vibration information collection device may be arranged in the treatment water in the treatment water tank.

Further, in the operation management support system for a water treatment plant according to one aspect, the vibration information collection device may be arranged to closely contact with or abut the air supply pipe.

Further, in the operation management support system for a water treatment plant according to one aspect, the vibration information may be acoustic information of a sound of a rising bubble in water, the sound being produced by the bubble, a bubble bursting sound, a water flow sound, a wave splash sound, or a combination sound of the sound of the rising bubble, the bubble bursting sound, the water flow sound, and the wave splash sound, the vibration information collection device may be a microphone which collects the acoustic information, and the vibration information obtainment unit may perform the predetermined transform processing for the acoustic information collected by the microphone.

Further, in the operation management support system for a water treatment plant according to one aspect, the vibration information may be vibration information of vibration by a rising bubble in water, the vibration being produced by the bubble, bubble bursting vibration, water flow vibration, wave splash vibration, or combination vibration of the vibration by the rising bubble, the bubble bursting vibration, the water flow vibration, and the wave splash vibration, the vibration information collection device may be a vibration sensor which collects the vibration information, and the vibration information obtainment unit may perform the predetermined transform processing for the acoustic information collected by the vibration sensor.

Further, in the operation management support system for a water treatment plant according to one aspect, the predetermined transform processing may be a short-time Fourier transform in which the vibration information obtained by the vibration information obtainment unit is cut out for a predetermined time and which is performed for the cut vibration information.

Further, in the operation management support system for a water treatment plant according to one aspect, the determination algorithm execution unit may calculate an average, a standard deviation, or a coefficient of variation about a time change in a vibration intensity at each frequency for the vibration information, for which the predetermined transform processing is performed by the vibration information obtainment unit, and may output a result of integration of a standard deviation or a coefficient of variation about frequencies in a predetermined range or all frequencies of recording, and when a numerical value about the time change in the vibration intensity, the numerical value being output from the determination algorithm execution unit, is greater than a predetermined threshold value, the vibration information determination unit may determine that an abnormality is present in the air diffuser.

Further, in the operation management support system for a water treatment plant according to one aspect, the vibration information obtainment unit may transform the vibration information, for which the predetermined transform processing is performed, to three-dimensional information of a time, a frequency, and a vibration intensity, the determination algorithm execution unit may calculate a divergence degree between the three-dimensional information transformed by the vibration information obtainment unit and the three-dimensional information based on vibration information in a normal condition, the vibration information being learned in advance, and may output the divergence degree, and when a numerical value about the time change in the vibration intensity, the numerical value being output from the determination algorithm execution unit, is greater than a predetermined threshold value, the vibration information determination unit may determine that an abnormality is present in the air diffuser.

Further, in the operation management support system for a water treatment plant according to one aspect, the predetermined threshold value may be different for each time period or each predetermined time range or for each aeration tank or each section of the aeration tank.

Further, in the operation management support system for a water treatment plant according to one aspect, the vibration information obtainment unit may transform the vibration information, for which the predetermined transform processing is performed, to three-dimensional information of a time, a frequency, and a vibration intensity, the determination algorithm execution unit may classify the three-dimensional information transformed by the vibration information obtainment unit based on the three-dimensional information based on vibration information which is learned in advance, and when a result about a time change in the vibration intensity, the result being classified by the determination algorithm execution unit, is a classification indicating an abnormality of the air diffuser, the vibration information determination unit may determine that an abnormality is present in the air diffuser.

Further, the operation management support system for a water treatment plant according to one aspect may further include a determination algorithm generation unit which generates the predetermined determination algorithm based on the vibration information for which the predetermined transform processing is performed by the vibration information obtainment unit.

Further, in the operation management support system for a water treatment plant according to one aspect, the determination algorithm generation unit may update the predetermined determination algorithm for each predetermined period or each predetermined time range.

Further, in the operation management support system for a water treatment plant according to one aspect, the determination result notification unit may notify the result of the determination by the vibration information determination unit to an outside of the information processing device by a display apparatus or an information processing terminal.

As for an operation management support method for a water treatment plant according to one aspect, in a water treatment plant that includes an air supply pipe through which air or oxygen is delivered from an air blower, an air diffuser which is connected to the air supply pipe and to which the air or the oxygen is supplied from the air supply pipe, a treatment water tank in which the air diffuser is arranged in treatment water and the air or the oxygen is released into the water from the air diffuser, and a vibration information collection device that collects vibration information produced by bubbles which are formed in the water by the air or the oxygen, the air or the oxygen being released from the air diffuser, in the treatment water tank, the operation management support method includes: a vibration information obtainment step of obtaining the vibration information from the vibration information collection device and of performing predetermined transform processing for the obtained vibration information; a determination algorithm execution step of executing processing based on a predetermined determination algorithm for the vibration information for which the predetermined transform processing is performed; a vibration information determination step of making a determination about an abnormality of the air diffuser based on an output result output by the determination algorithm execution step; and a determination result notification step of notifying a result of a determination by the vibration information determination step.

### Advantageous Effect of the Invention

In the present disclosure, an ordinary facility manager is enabled to detect an abnormality of an air diffuser in an operation of a water treatment plant.

### Brief Description of the Drawings

Fig. 1 is a diagram illustrating one embodiment of water treatment plant operation management support system and operation management support method.
Fig. 2 is a diagram illustrating one example of an arrangement method of a vibration information collection device in the water treatment plant operation management support system illustrated in Fig. 1.
Fig. 3 is a diagram illustrating another example of the arrangement method of the vibration information collection device in the water treatment plant operation management support system illustrated in Fig. 1.
Fig. 4 is a diagram illustrating another example of the arrangement method of the vibration information collection device in the water treatment plant operation management support system illustrated in Fig. 1.
Fig. 5 is a diagram illustrating a configuration example of an information processing device illustrated in Fig. 2 to Fig. 4.
Fig. 6 is a diagram illustrating a flow of vibration information processing by the information processing device illustrated in Fig. 2 to Fig. 4 and classifications of a processing method.
Fig. 7 is a diagram illustrating vibration information which is cut out for a certain time.
Fig. 8 is a diagram illustrating a state where a result of a short-time Fourier transform is transformed into gray scale images.
Fig. 9 is a diagram illustrating bands in a vertical direction in the image illustrated in Fig. 8(b) for easy understanding.
Fig. 10 is a diagram which schematically illustrates a result of the short-time Fourier transform in normal bubbling illustrated in Fig. 8(a).
Fig. 11 is a diagram which schematically illustrates a result of the short-time Fourier transform in abnormal bubbling illustrated in Fig. 8(b) and Fig. 9.
Fig. 12 is a flowchart illustrating an example of a flow of processing in a case where processing without machine learning is performed by the information processing device illustrated in Fig. 2 to Fig. 5.
Fig. 13 is a flowchart illustrating an example of a flow of processing in a case where processing by unsupervised machine learning is performed by the information processing device illustrated Fig. 2 to Fig. 5.
Fig. 14 is a flowchart illustrating an example of a flow of processing in a case where processing by supervised machine learning is performed by the information processing device illustrated in Fig. 2 to Fig. 5.
Fig. 15 is a conceptual diagram illustrating a hardware configuration example of a processing circuit provided in the information processing device according to the embodiment illustrated in Fig. 1 to Fig. 14.

### Description of Embodiment

One embodiment of an operation management support system 1 and an operation management support method for a water treatment plant 10, according to the present disclosure, will hereinafter be described by using drawings.

### <Configuration Example of One Embodiment>

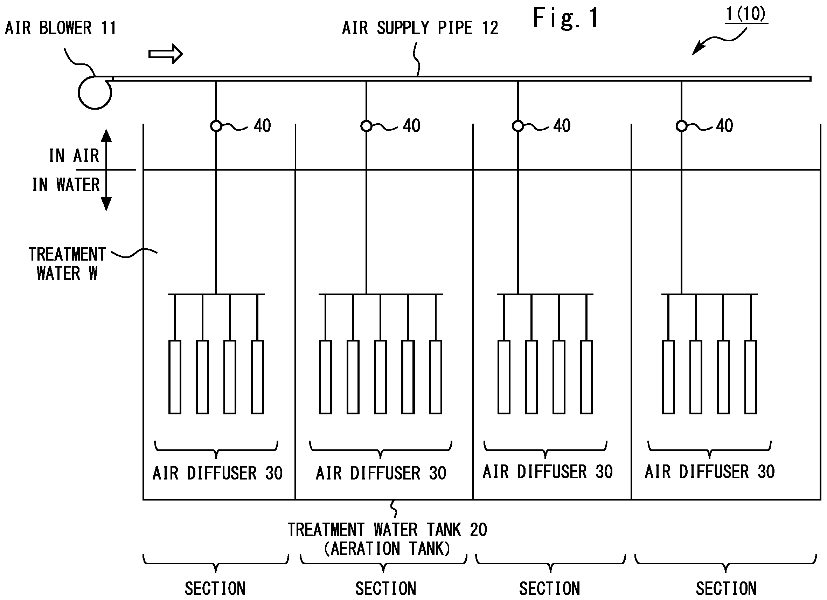

Fig. 1 is a diagram illustrating one embodiment of the operation management support system 1 and the operation management support method for the water treatment plant 10. Fig. 1 schematically illustrates one example of the water treatment plant 10 in the operation management support system 1 for the water treatment plant 10.

As illustrated in Fig. 1, in the operation management support system 1 for the water treatment plant 10, the water treatment plant 10 has an air blower 11, an air supply pipe 12, a treatment water tank 20, air diffusers 30, and vibration information collection devices 40. The water treatment plant 10 is a sewage treatment or waste water treatment facility or a sewage or waste water treatment plant in which an activated sludge method is used, the activated sludge method performing water quality purification by using aerobic microbes, for example.

The air blower 11 is connected to a plurality of air diffusers 30 via the air supply pipe 12. The air blower 11 delivers (supplies) air or oxygen to the plurality of air diffusers 30 via the air supply pipe 12.

As for the air supply pipe 12, its one end is connected to the air blower 11, the air supply pipe 12 is branched into a plurality of portions, and a plurality of other ends of the branched portions are respectively connected to the air diffusers 30. The air supply pipe 12 supplies air or oxygen supplied from the air blower 11 to each of the plurality of air diffusers 30 which are connected to the other ends.

The treatment water tank 20 is a water tank which stores treatment water W such as sewage, dirty water, or waste water, and the plurality of air diffusers 30 are arranged in the treatment water W stored in the treatment water tank 20. The treatment water tank 20 is divided into a plurality of water tanks (sections), for example, and the plurality of air diffusers 30 are arranged in the respective water tanks (sections). In the treatment water tank 20, water quality purification for the treatment water W is performed by the activated sludge method using aerobic microbes which decompose organic substances. Note that in the present specification, the treatment water tank 20 will also be referred to as "aeration tank 20".

The air diffuser 30 is connected to the air blower 11 via the air supply pipe 12, and the plurality of air diffusers 30 are arranged in the treatment water W in one aeration tank 20. The air diffuser 30 includes an air diffusion body which is formed with a sheet or membrane made of rubber or resin, a porous body made by sintering ceramic powder, and so forth, a holder which retains the air diffusion body, and a packing which maintains airtightness between the air diffusion body and the holder and prevents leakage of air or oxygen, for example. The air diffusion body has many air diffusion holes which cause an inside to communicate with an outside, and air or oxygen supplied from the air supply pipe 12 passes through the many air diffusion holes, becomes fine bubbles A, and is supplied (emitted as bubbles) into the treatment water W in the aeration tank 20. Note that the air diffuser 30 may be a pipe having a space in its internal space, and many air diffusion holes which cause an inside to communicate with an outside may be provided in a side surface of the above pipe.

The air diffuser 30 causes oxygen to be dissolved into water by causing the bubbles A discharged from the air diffusion holes to contact with the treatment water W, stirs the treatment water W stored in the aeration tank 20 by motions of the bubbles A, and thereby supplies the dissolved oxygen into the whole aeration tank 20. Accordingly, the air diffuser 30 uniformly diffuses oxygen necessary for respiration of aerobic microbes in the aeration tank into the treatment water W to cause the oxygen to be dissolved, activates aerobic microbes in the aeration tank 20, and thereby purifies the treatment water W in the aeration tank 20.

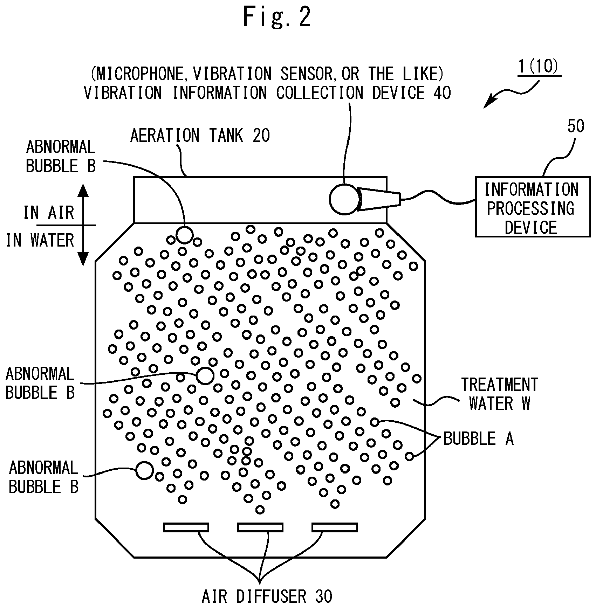

The vibration information collection device 40 is a microphone, a vibration sensor, or the like, for example, and regularly or in real time collects sounds (acoustic sounds or noise) produced by the bubbles A emitted from the air diffuser 30 into the treatment water W. Note that for example, in a case where the vibration information collection device 40 is the microphone, the microphone regularly or in real time collects acoustic information of sounds (acoustic sounds) produced by the bubbles A emitted from the air diffuser 30 into the treatment water W. The vibration information collection device 40 is connected to an information processing device 50 (see Figs. 2 to 4) which will be described later. Note that the microphone or the vibration sensor is one example of the vibration information collection device 40, and another device or the like may be used as long as the device is capable of collecting acoustic information or vibration information. Note that as for the sounds (acoustic sounds or noise), vibration of air is detected as a sound pressure level, and because a sound (acoustic sound or noise) is also vibration of air in a broad sense, in the present specification, acoustic information will also be described as vibration information.

Note that in the present specification, it is assumed that vibration (sound) produced by a bubble includes vibration (sound) which is produced when a bubble rises in water, vibration (sound) produced when a bubble bursts, vibration (sound) produced by a water flow induced by a rise of a bubble, and vibration (sound) produced by a wave splash caused by a water flow induced by a rising bubble. Further, the vibration (sound) produced by a bubble may be vibration (sound) due to any combination of those.

Fig. 2 is a diagram illustrating one example of an arrangement method of the vibration information collection device 40 in the operation management support system 1 for the water treatment plant 10, which is illustrated in Fig. 1. Fig. 2 schematically illustrates one example of a situation where one aeration tank 20 in the water treatment plant 10 is seen from a side. Note that the air supply pipe 12 (see Fig. 1) is not illustrated.

In the aeration tank 20, the air supply pipe 12 (see Fig. 1) which is not illustrated, a plurality of air diffusers 30, and the vibration information collection device 40 are arranged. The vibration information collection device 40 is connected to the information processing device 50 in a wired or wireless manner on the outside of the aeration tank 20. The treatment water W is stored in the aeration tank 20. Further, an upper portion of the aeration tank 20 is covered by a cover lid which is not illustrated.

The plurality of air diffusers 30 emit the bubbles A, which are formed of air or oxygen supplied from the air supply pipe 12, from many air diffusion holes. For example, when a fracture, damage, or the like occurs to the air diffusion body or the air diffusion hole of the air diffuser 30, the bubble A is emitted as a coarse bubble B with a large diameter (abnormal bubbling). Note that in the present specification, the coarse bubble B will also be referred to as "abnormal bubble B".

The vibration information collection device (microphone or vibration sensor) 40 collects sounds (vibration) produced from the bubbles A and the coarse bubbles B which are emitted into the treatment water W. In a case where the vibration information collection device 40 is a microphone, the vibration information collection device 40 may collect and record the sounds produced from the bubbles A and the coarse bubbles B. Further, in a case where the vibration information collection device 40 is a vibration sensor, the vibration information collection device 40 may collect (and record) vibration produced from the bubbles A and the coarse bubbles B which are emitted into the treatment water W. The vibration information collection device 40 outputs the recorded (collected) sounds (vibration information) to the information processing device 50.

In the example in Fig. 2, the vibration information collection device 40 is arranged in air close to a water surface of the aeration tank 20. For example, one vibration information collection device 40 is arranged for one aeration tank 20. Note that a plurality of vibration information collection devices 40 may be arranged in each section for one aeration tank 20, and one vibration information collection device 40 may be arranged for one air diffuser 30.

The information processing device 50 is connected to the vibration information collection device 40 and obtains the vibration information output from the vibration information collection device 40. Note that sound recording and recording of sounds and vibration may be performed not by the vibration information collection device 40 such as the microphone or the vibration sensor but by the information processing device 50. Details of the information processing device 50 will be described later.

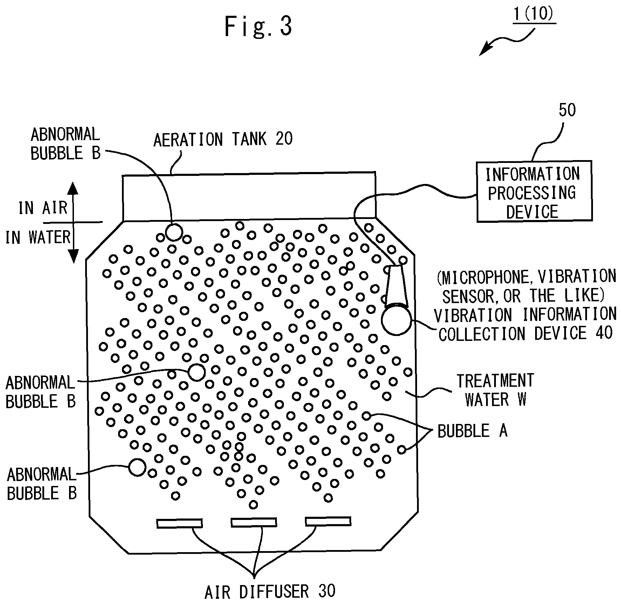

Fig. 3 is a diagram illustrating another example of the arrangement method of the vibration information collection device 40 in the operation management support system 1 for the water treatment plant 10, which is illustrated in Fig. 1. As in Fig. 2, Fig. 3 schematically illustrates one example of a situation where one aeration tank 20 in the water treatment plant 10 is seen from a side. Note that in the Fig. 3, the same reference characters will be given to configurations the same as or similar to Fig. 2, and detailed descriptions thereof will be skipped or simplified.

In Fig. 3, the vibration information collection device (microphone or vibration sensor) 40 is arranged in the treatment water W. Even in water, the vibration information collection device 40 can collect the sounds (vibration) produced from the bubbles A and the coarse bubbles B. Note that because the other configurations are similar to Fig. 2, descriptions thereof will be skipped.

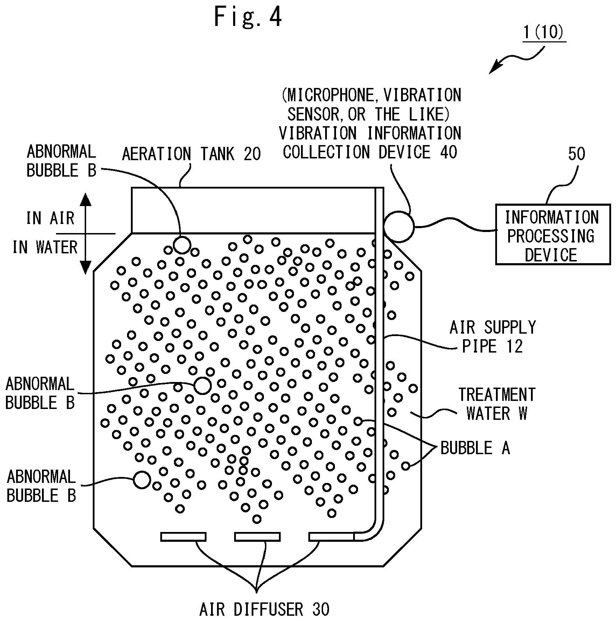

Fig. 4 is a diagram illustrating another example of the arrangement method of the vibration information collection device 40 in the operation management support system 1 for the water treatment plant 10, which is illustrated in Fig. 1. As in Fig. 2 and Fig. 3, Fig. 4 schematically illustrates one example of a situation where one aeration tank 20 in the water treatment plant 10 is seen from a side. Note that in the Fig. 4, the same reference characters will be given to configurations the same as or similar to Fig. 2 and Fig. 3, and detailed descriptions thereof will be skipped or simplified.

In Fig. 4, the vibration information collection device (microphone or vibration sensor) 40 is arranged to closely contact with or abut the air supply pipe 12. For example, in a case where the coarse bubble B is emitted from the air diffuser 30, the vibration information collection device 40 can collect a sound (vibration) of emission of the coarse bubble B together with a sound (vibration) of air supplied from the air blower 11 through the air supply pipe 12. Note that the vibration information collection devices 40 may be arranged to respectively closely contact with or respectively abut a plurality of air supply pipes 12 which are not illustrated. Note that because the other configurations are similar to Fig. 2 and Fig. 3, descriptions thereof will be skipped.

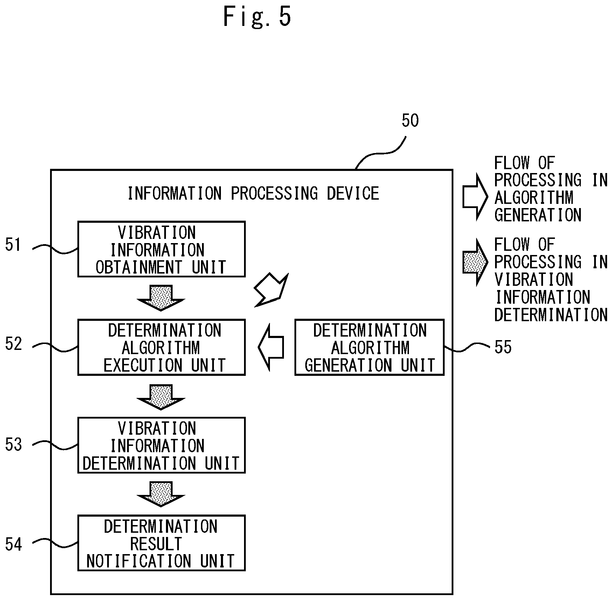

Fig. 5 is a diagram illustrating a configuration example of the information processing device 50 illustrated in Fig. 2 to Fig. 4. The information processing device 50 is provided in the water treatment plant 10 or in a remote location from the water treatment plant 10, for example, and although wiring and so forth are not illustrated in Fig. 5, the information processing device 50 is connected to the vibration information collection device 40 in a wired or wireless manner. Note that the information processing device 50 may include a communication unit, an operating unit, a display unit, a storage unit, a control unit, and so forth, which are not illustrated.

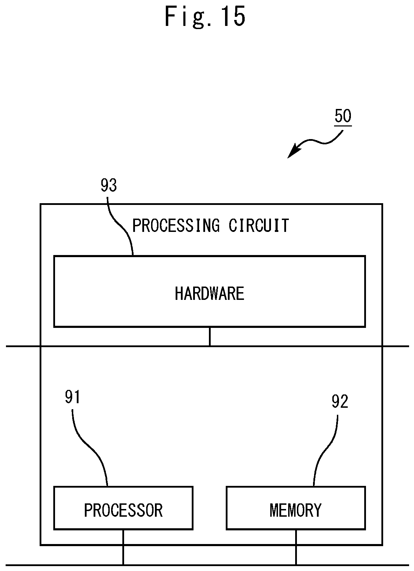

The information processing device 50 has a processor 91 (see Fig. 15), which will be described later, such as a CPU (central processing unit), an MPU (micro processing unit), or a GPU (graphics processing unit) which acts by executing a program, for example. The information processing device 50 has a memory 92 (see Fig. 15) which will be described later, for example, executes a predetermined program stored in the memory 92, thereby causes the processor 91 to act, and performs processing of the vibration information.

The information processing device 50 executes predetermined programs stored in the memory 92 (see Fig. 15) which will be described later, for example, and thereby functions as the following units. The information processing device 50 functions as a vibration information obtainment unit 51, a determination algorithm execution unit 52, a vibration information determination unit 53, a determination result notification unit 54, and a determination algorithm generation unit 55. Note that the above functions may be realized by programs executed by an arithmetic processing device which is provided in the information processing device 50 and is not illustrated or may be realized with hardware. The vibration information obtainment unit 51, the determination algorithm execution unit 52, the vibration information determination unit 53, the determination result notification unit 54, and the determination algorithm generation unit 55 execute predetermined programs and thereby perform the following processing.

The vibration information obtainment unit 51 obtains the vibration information from the vibration information collection device 40 and performs predetermined transform processing for the obtained vibration information. Note that details of processing by the vibration information obtainment unit 51 will be described later.

The determination algorithm execution unit 52 performs processing based on a predetermined determination algorithm for the vibration information for which the predetermined transform processing has been performed by the vibration information obtainment unit 51. Note that details of processing by the determination algorithm execution unit 52 will be described later.

The vibration information determination unit 53 makes a determination about an abnormality of the air diffuser 30 based on an output result output from the determination algorithm execution unit 52. Note that details of processing by the vibration information determination unit 53 will be described later.

The determination result notification unit 54 notifies a result of a determination by the vibration information determination unit 53. Note that the determination result notification unit 54 notifies the result by a method in which the result is displayed on a display apparatus through a contact output, a current value output, or a voltage value output, for example. Alternatively, the determination result notification unit 54 notifies the result by a method in which the result is displayed on an information processing terminal such as a personal computer or a smartphone through an electronic mail or the like, for example. Alternatively, the determination result notification unit 54 notifies the result by a method in which the result is displayed on a display apparatus connected to the information processing device 50, for example. Note that notification methods are not limited to those. Further, the determination result notification unit 54 may notify the result to the outside of the information processing device 50 by the above display apparatus, information processing terminal, or the like.

The determination algorithm generation unit 55 generates a predetermined determination algorithm based on the vibration information for which the predetermined transform processing has been performed by the vibration information obtainment unit 51. The determination algorithm generation unit 55 may update the predetermined determination algorithm for each predetermined period, for each predetermined time range, or in real time. This is because it is possible that due to seasonal water temperature changes or water quality changes of sewage or waste water, the water quality of the treatment water W of the aeration tank 20 changes, a physical property such as viscosity changes, and characteristics of a frequency and a vibration intensity of a bursting sound of the bubble on the water surface thereby change.

Note that in Fig. 5, a flow of processing in determination algorithm generation is as indicated by hollow arrows, and a flow of processing in a vibration information determination is as indicated by gray arrows. In the determination algorithm generation, the vibration information sent to the information processing device 50 is sent to the determination algorithm generation unit 55 as indicated by the hollow arrows, and a determination algorithm is thereby generated.

Meanwhile, in the vibration information determination (in determination algorithm execution), as indicated by the gray arrows, the vibration information sent to the information processing device 50 is sent to the vibration information determination unit 53 through processing by the determination algorithm execution unit 52. A result about soundness of the air diffuser 30, the soundness being determined by the vibration information determination unit 53, is sent to the determination result notification unit 54 and is notified to the outside of the information processing device 50 by the determination result notification unit 54.

Note that because the determination algorithm execution unit 52 performs processing of information based on the determination algorithm generated by the determination algorithm generation unit 55, the processing by the determination algorithm execution unit 52 and processing by the determination algorithm generation unit 55 are usually not performed at the same time. However, the processing by the determination algorithm execution unit 52 and processing by the determination algorithm generation unit 55 may be performed at the same time.

Note that the determination algorithm may be an algorithm in which the vibration information (acoustic information) is decomposed into frequencies by a short-time Fourier transform or may be an algorithm in which machine learning including deep learning is performed.

### <Processing Example of One Embodiment>

In the following, a description will be made about a flow of information processing which is performed by the information processing device 50. First, the information processing device 50 sets the vibration information (acoustic information) recorded (sound recording) in the aeration tank 20 to a state where the vibration information can be handled as digital data and performs a vibration analysis (acoustic analysis) by a Fourier transform or machine learning (deep learning). Then, the information processing device 50 determines whether the vibration information represents a normal bubbling state or an abnormal bubbling state from a result of the vibration analysis (acoustic analysis) and notifies that an abnormality is present in a case of abnormal bubbling.

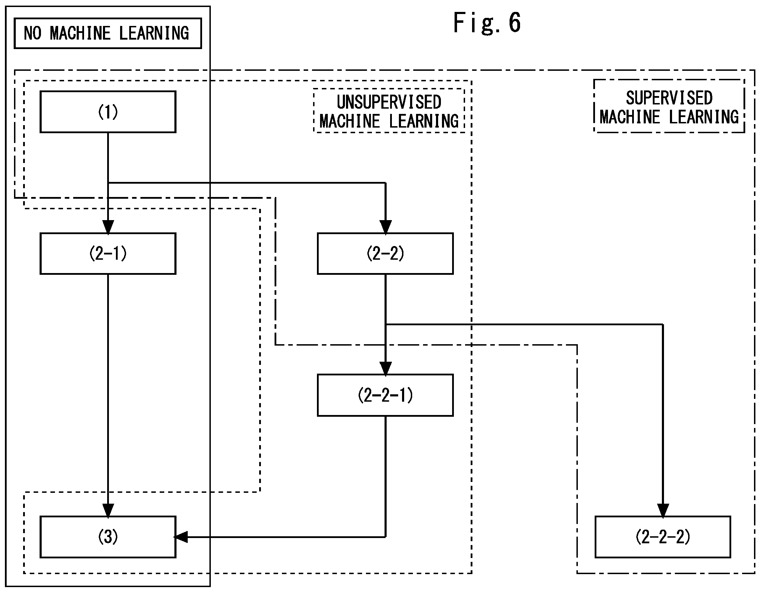

Fig. 6 is a diagram illustrating a flow of vibration information processing by the information processing device 50 illustrated in Fig. 2 to Fig. 4 and classifications of a processing method. Fig. 6 illustrates three examples of the processing method about a method of information processing performed by the information processing device 50. That is, Fig. 6 illustrates three examples of the processing method which are processing without machine learning, processing by unsupervised machine learning, and processing by supervised machine learning.

In Fig. 6, in the processing without machine learning, the processing is performed in order of (1) -> (2-1) -> (3) which are surrounded by solid lines. In the processing by unsupervised machine learning, the processing is performed in order of (1) -> (2-2) -> (2-2-1) -> (3) which are surrounded by broken lines. In the processing by supervised machine learning, the processing is performed in order of (1) -> (2-2) -> (2-2-2) which are surrounded by one-dot chain lines.

For example, in (1) in Fig. 6, the vibration information obtainment unit 51 of the information processing device 50 cuts out the recorded vibration information for a predetermined time (for example, 10 seconds). Then, the vibration information obtainment unit 51 performs the short-time Fourier transform for a time corresponding to approximately 50 to 5,000 times a sampling rate, for example, a whole range of a recording time.

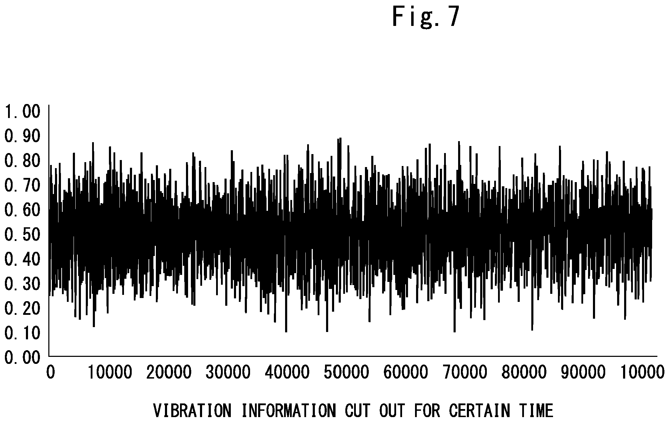

Fig. 7 is a diagram illustrating the vibration information which is cut out for a certain time. Note that Fig. 7 is a graph created based on an experiment which the applicant performed by using a microphone as the vibration information collection device 40. In Fig. 7, the horizontal axis represents time, and the vertical axis represents sound pressure level (vibration level). In Fig. 7, raw acoustic data (vibration data) recorded (collected) by the vibration information collection device 40 are cut out for 10 seconds by the vibration information obtainment unit 51. In raw acoustic information (vibration information) illustrated in Fig. 7, because distinction cannot be made between the normal bubbling and the abnormal bubbling, the vibration information obtainment unit 51 performs the short-time Fourier transform for the raw acoustic information (vibration information) illustrated in Fig. 7. Note that in the present specification, the vibration level (sound pressure level) will also be referred to as vibration intensity (sound pressure intensity).

Returning to Fig. 6, in (2-1), the vibration information obtainment unit 51 of the information processing device 50 calculates an average, a standard deviation, a coefficient of variation, and so forth about a time change in the vibration level (sound pressure level) at each frequency. Then, the vibration information obtainment unit 51 integrates the standard deviation or the coefficient of variation for frequencies in a predetermined range or all of the frequencies of recording.

Further, in (2-2), the vibration information obtainment unit 51 of the information processing device 50 transforms a result of the short-time Fourier transform into three-dimensional information of a time, a frequency, and the vibration level (sound pressure level).

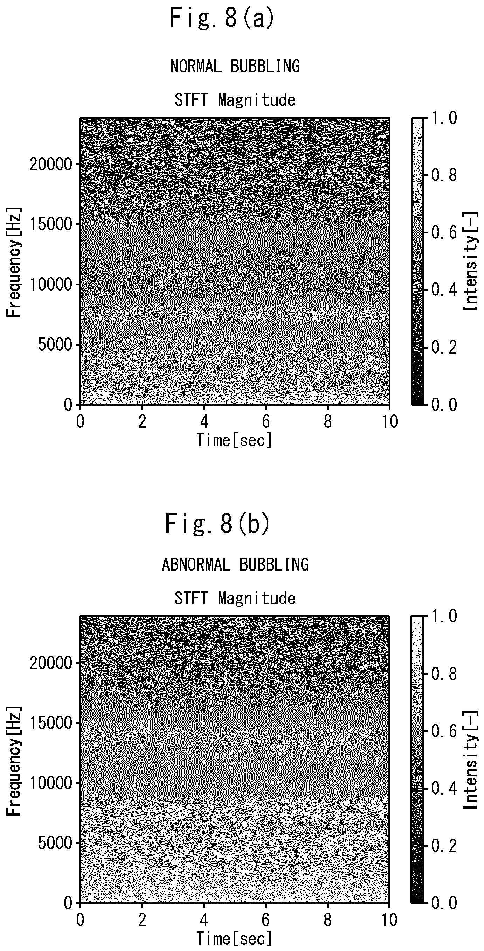

Fig. 8 is a diagram illustrating a state where the result of the short-time Fourier transform is transformed into gray scale images. Fig. 8(a) is a diagram illustrating a state where the result of the short-time Fourier transform in the normal bubbling is transformed to a gray scale image, and Fig. 8(b) is a diagram illustrating a state where the result of the short-time Fourier transform in the abnormal bubbling is transformed to a gray scale image. Note that Fig. 8(a) and Fig. 8(b) are diagrams created based on the experiment which the applicant performed by using the microphone as the vibration information collection device 40.

In Fig. 8(a) and Fig. 8(b), the horizontal axis represents time, and the examples in Fig. 8 illustrate a situation where the short-time Fourier transform is performed for the acoustic data (vibration data) recorded for 10 seconds. The vertical axis represents frequency, an upper side in Fig. 8 represents sounds (vibration) at high frequencies, and a lower side in Fig. 8 represents sounds (vibration) at low frequencies. Differences in color represent differences in the sound pressure level (vibration level), deeper colors represent lower sound pressure levels (vibration levels), and thinner colors represent higher sound pressure levels (vibration levels).

For example, when bubbles are emitted in still water, that is, clean water, for example, bursting sounds of bubbles such as a popping sound or a fizzing sound are heard, but as illustrated in Fig. 7, with the raw acoustic data (vibration data), distinction cannot be made between a normal bubbling sound (vibration) and an abnormal bubbling sound (vibration). Thus, the short-time Fourier transform is performed, the result of the short-time Fourier transform is illustrated as the gray scale images as illustrated in Fig. 8, and an analysis is performed.

For example, a known literature (Donald E. Spiel "Acoustical Measurements of Air Bubbles Bursting at a Water Surface: Bursting Bubbles as Helmholtz Resonators" J. Geophysical Research, 97, 11443-11452, 1992) discloses that frequencies of bursting sounds of bubbles are different in accordance with a diameter of a bubble. The above essay indicates that a burst of a bubble is based on Helmholtz resonance and indicates that the frequency of a sound of a bursting bubble can be calculated based on the principle of Helmholtz resonance.

In Fig. 8, stripe patterns in a lateral direction are hardly different between Fig. 8(a) which illustrates the result of the short-time Fourier transform in the normal bubbling and Fig. 8(b) which illustrates the result of the short-time Fourier transform in the abnormal bubbling. On the other hand, differently from Fig. 8(a) which illustrates the result of the short-time Fourier transform in the normal bubbling, some bands in the vertical direction (vertical lines) like scratch marks are seen at random in Fig. 8(b) which illustrates the result of the short-time Fourier transform in the abnormal bubbling. In the above essay, experiments are performed only for small bubbles to a diameter of approximately four millimeters or smaller, for example. However, it has been found by an experiment by the applicant that the result illustrated in Fig. 8(b) is exhibited in a case where the coarse bubbles B with diameters of approximately ten to several ten millimeters are produced, for example, when the air diffuser 30 is damaged.

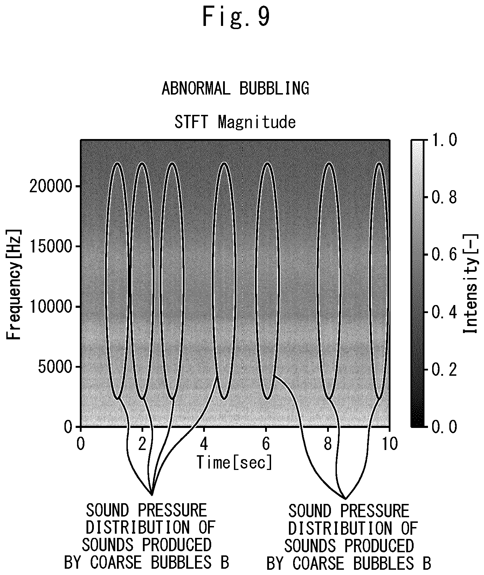

Fig. 9 is a diagram illustrating the bands in the vertical direction in the image illustrated in Fig. 8(b) for easy understanding. In Fig. 9, the bands in the vertical direction are surrounded by ellipses in Fig. 8(b) which illustrates the result of the short-time Fourier transform in the abnormal bubbling. Based on Fig. 9, as described above, it may be understood that some bands in the vertical direction (vertical lines) like scratch marks are seen at random in the abnormal bubbling. That is, based on Fig. 8(b) and Fig. 9, it may be understood that a time change in the sound pressure intensity (sound pressure level) is seen, the time change being not seen in the normal bubbling (Fig. 8(a)). This is because the coarse bubbles B are discontinuously (at random) produced in an abnormal condition and sounds of the coarse bubbles B are discontinuously (at random) produced.

Further, as illustrated in Fig. 8(b) and Fig. 9, it may be understood that when the abnormal bubbling such as the coarse bubbles B occurs in the aeration tank 20, sounds are heard in a very wide frequency range of about 3,000 to 20,000 hertz (the sound pressures are distributed). That is, when a change in a sound volume or a time change in the sound pressure can be detected in a wide frequency band, whether the bubbling is the normal bubbling or the abnormal bubbling can be detected. When a time change in the sound pressure intensity (sound pressure level) can be detected at least in a predetermined frequency band, whether the bubbling is the normal bubbling or the abnormal bubbling can be detected.

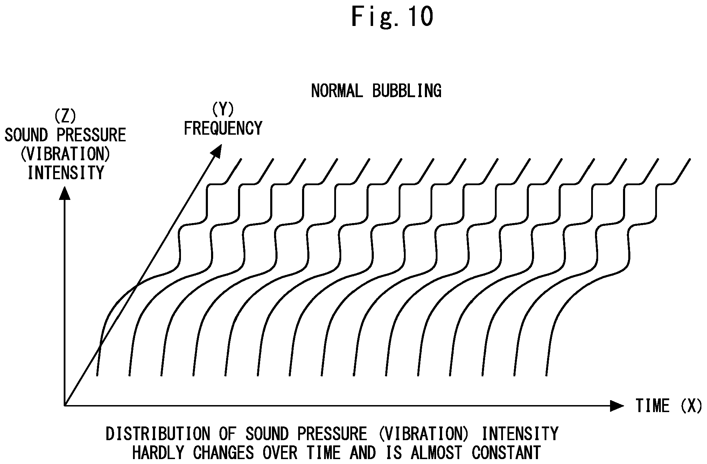

Fig. 10 is a diagram which schematically illustrates the result of the short-time Fourier transform in the normal bubbling illustrated in Fig. 8(a). As in Fig. 8, in Fig. 10, the horizontal axis (X axis direction) represents time, and the vertical axis (Y axis direction) represents frequency. Further, a height direction (Z axis direction) represents the sound pressure (vibration) intensity. The Z axis direction represents a magnitude, which is represented by brightness (light and shade) of gray scale in Fig. 8, by a magnitude of height. That is, Fig. 10 illustrates a three-dimensional graph of the time, the frequency, and the sound pressure (vibration) intensity.

Fig. 10 schematically illustrates that a change in the stripe pattern in the lateral direction over time in Fig. 8(a) is small and is almost constant. That is, based on Fig. 10, it may be understood that in the normal bubbling, a change over time (time change) in a distribution of the sound pressure (vibration) intensity is small and is almost constant.

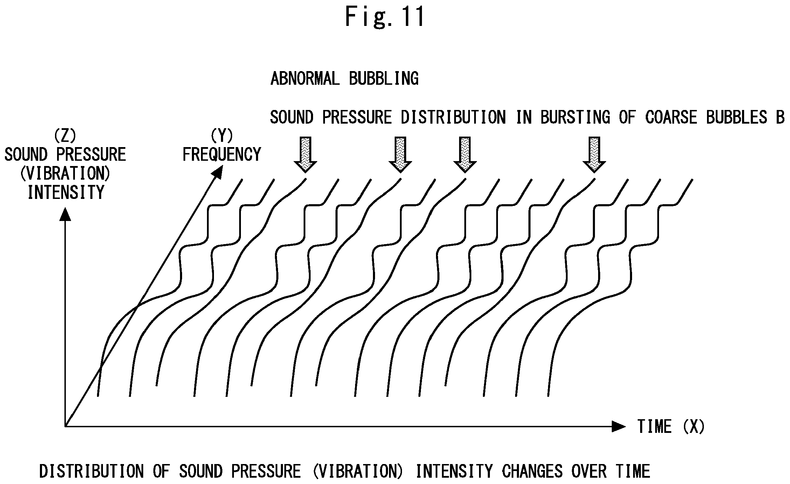

Fig. 11 is a diagram which schematically illustrates the result of the short-time Fourier transform in the abnormal bubbling illustrated in Fig. 8(b) and Fig. 9. As in Fig. 10, Fig. 11 illustrates a three-dimensional graph of the time, the frequency, and the sound pressure (vibration) intensity.

Fig. 11 schematically illustrates that some bands in the vertical direction (vertical lines) like scratch marks in Fig. 8(b) are seen at random, as the bands in the vertical direction are indicated as sound pressure distributions in bursting of the coarse bubbles by arrows. That is, based on Fig. 11, it may be understood that in the abnormal bubbling, the distribution of the sound pressure (vibration) intensity changes over time (time change).

Fig. 8 to Fig. 11 illustrate the gray scale images and the three-dimensional graphs, but those actually are numerical values of three-dimensional information formed with the time, the frequency, and the vibration intensity. Thus, when the time change in the sound pressure intensity is a predetermined value or larger in a predetermined frequency band (or a wide frequency band), the information processing device 50 determines that the abnormal bubbling is present (without machine learning). Note that the information processing device 50 may learn information of normal bubbling states based on the three-dimensional information by machine learning, may calculate differences in feature quantity (or time change) from abnormal bubbling states, and may determine that the abnormal bubbling is present when the calculated difference is a predetermined value or larger (unsupervised machine learning). Alternatively, the information processing device 50 may learn the three-dimensional information of the normal bubbling states and the three-dimensional information of the abnormal bubbling states by machine learning and may make a determination about a kind of the abnormal bubbling state based on a feature quantity (or time change) or the like of the three-dimensional information (supervised machine learning).

Returning to Fig. 6, in (2-2-1), the determination algorithm execution unit 52 of the information processing device 50 performs learning by using a machine learning algorithm such as deep learning while using the vibration information, which is set as the three-dimensional information in the normal bubbling illustrated in Fig. 8(a), as learning data. Then, the determination algorithm execution unit 52 inputs newly studied vibration information to a learned algorithm which is learned in advance and calculates a divergence degree from learned image information.

Further, in (2-2-2), the determination algorithm execution unit 52 of the information processing device 50 performs learning by using a machine learning algorithm such as deep learning while using the vibration information, which is set as the three-dimensional information in the normal bubbling and abnormal bubbling illustrated in Fig. 8(a) and Fig. 8(b), as training data. Then, the determination algorithm execution unit 52 inputs newly studied vibration information to a learned algorithm which is learned in advance. Then, the vibration information determination unit 53 of the information processing device 50 identifies a kind of abnormality based on a result output by the determination algorithm execution unit 52. Note that the result output by the determination algorithm execution unit 52 may be a table in which normal conditions and abnormal conditions are separated and compiled.

Further, in (3), the vibration information determination unit 53 of the information processing device 50 determines that an abnormality is present in a case where a value obtained in (2-1) or (2-2-1) is larger than a threshold value (predetermined threshold value) which is set in advance.

### <Processing Example without Machine Learning>

In the following, a description will be made about a processing example without machine learning by the information processing device 50.

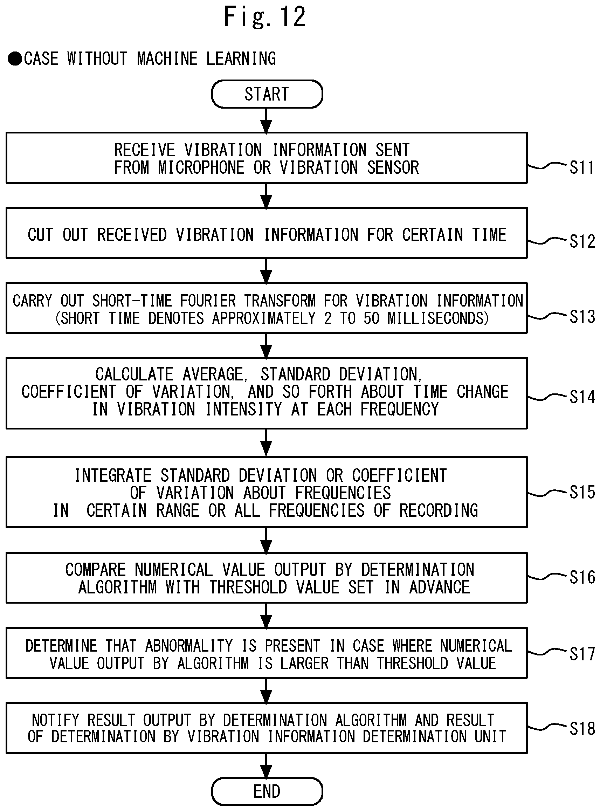

Fig. 12 is a flowchart illustrating an example of a flow of processing in a case where the processing without machine learning is performed by the information processing device 50 illustrated in Fig. 2 to Fig. 5. The flowchart illustrated in Fig. 12 illustrates an example of a case where the information processing device 50 performs the processing in order of (1) -> (2-1) → (3) which are surrounded by the solid lines in Fig. 6.

In step S 11, the vibration information obtainment unit 51 receives the vibration information sent from the vibration information collection device 40 (microphone or vibration sensor).

In step S12, the vibration information obtainment unit 51 cuts out the received vibration information (acoustic information) for a certain time (for example, see Fig. 7).

In step S 13, the vibration information obtainment unit 51 carries out the short-time Fourier transform for the cut vibration information (acoustic information). Note that the short time denotes approximately 2 to 50 milliseconds, for example.

In step S14, the determination algorithm execution unit 52 calculates the average, the standard deviation, the coefficient of variation, and so forth about the time change in the vibration intensity (sound pressure intensity) at each frequency.

In step S15, the determination algorithm execution unit 52 integrates the standard deviation or the coefficient of variation for frequencies in a certain range or all of the frequencies of recording.

In step S16, the vibration information determination unit 53 compares a numerical value output by the determination algorithm and from the determination algorithm execution unit 52 with a threshold value (predetermined threshold value) which is set in advance. Note that the predetermined threshold value may be different for each time period or each predetermined time range which corresponds to a seasonal water temperature change or a water quality change of sewage or waste water or for each of the aeration tanks 20 or each section of the aeration tank 20.

In step S 17, in a case where the numerical value output by the determination algorithm is larger than the predetermined threshold value, the vibration information determination unit 53 determines that an abnormality is present.

In step S 18, the determination result notification unit 54 notifies a result output by the determination algorithm and a result of a determination by the vibration information determination unit 53. Note that the determination result notification unit 54 may notify the result of the determination by the vibration information determination unit 53 and may notify the result only in a case where the vibration information determination unit 53 determines that an abnormality is present.

### <Processing Example by Unsupervised Machine Learning>

Next, a description will be made about a processing example by unsupervised machine learning by the information processing device 50.

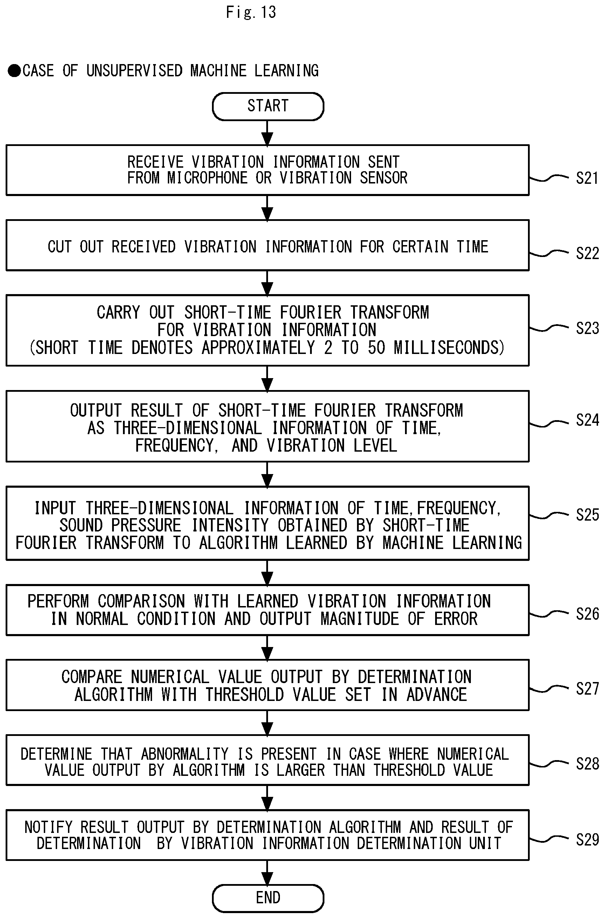

Fig. 13 is a flowchart illustrating an example of a flow of processing in a case where the processing by unsupervised machine learning is performed by the information processing device 50 illustrated Fig. 2 to Fig. 5. The flowchart illustrated in Fig. 13 illustrates an example of a case where the information processing device 50 performs the processing in order of (1) -> (2-2) → (2-2-1) -> (3) which are surrounded by broken lines in Fig. 6.

In step S21, the vibration information obtainment unit 51 receives the vibration information sent from the vibration information collection device 40 (microphone or vibration sensor).

In step S22, the vibration information obtainment unit 51 cuts out the received vibration information (acoustic information) for a certain time (for example, see Fig. 7).

In step S23, the vibration information obtainment unit 51 carries out the short-time Fourier transform for the cut vibration information (acoustic information). Note that the short time denotes approximately 2 to 50 milliseconds, for example.

In step S24, the vibration information obtainment unit 51 outputs a result of the short-time Fourier transform as the three-dimensional information of the time, the frequency, and the vibration level (sound pressure level). Note that Fig. 8 illustrates the gray scale images in which the time is transformed to a width, the frequency is transformed to a height, and the vibration level (sound pressure level) is transformed to brightness.

In step S25, the determination algorithm execution unit 52 inputs the three-dimensional information of the time, the frequency, and the vibration intensity (sound pressure intensity), which is obtained by the short-time Fourier transform, to a determination algorithm which is learned by machine learning. Note that the determination algorithm is updated by the determination algorithm generation unit 55 in each of the above predetermined periods, for example.

In step S26, the determination algorithm execution unit 52 performs a comparison with learned vibration information in a normal condition and outputs a magnitude of an error. In unsupervised machine learning, because the vibration information in the normal condition is learned by machine learning, how close to the vibration information in the normal condition the input three-dimensional information is is quantized.

In step S27, the vibration information determination unit 53 compares the numerical value output by the determination algorithm and from the determination algorithm execution unit 52 with a threshold value (predetermined threshold value) which is set in advance. Note that the predetermined threshold value may be different for each time period or each predetermined time range which corresponds to the seasonal water temperature change or the water quality change of sewage or waste water or for each of the aeration tanks 20 or each section of the aeration tank 20.

In step S28, in a case where the numerical value output by the determination algorithm is larger than the predetermined threshold value, the vibration information determination unit 53 determines that an abnormality is present.

In step S29, the determination result notification unit 54 notifies the result output by the determination algorithm and the result of the determination by the vibration information determination unit 53. Note that the determination result notification unit 54 may notify the result of the determination by the vibration information determination unit 53 and may notify the result only in a case where the vibration information determination unit 53 determines that an abnormality is present.

<Processing Example by Supervised Machine Learning>

Finally, a description will be made about a processing example by supervised machine learning by the information processing device 50.

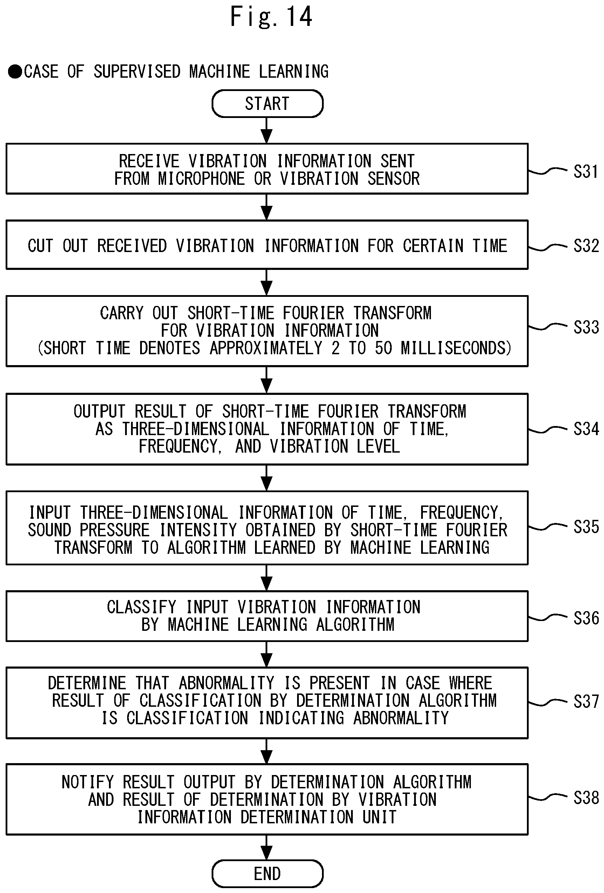

Fig. 14 is a flowchart illustrating an example of a flow of processing in a case where the processing by supervised machine learning is performed by the information processing device 50 illustrated in Fig. 2 to Fig. 5. The flowchart illustrated in Fig. 13 illustrates an example of a case where the information processing device 50 performs the processing in order of (1) -> (2-2) → (2-2-2) which are surrounded by the one-dot chain lines in Fig. 6.

In step S31, the vibration information obtainment unit 51 receives the vibration information sent from the vibration information collection device 40 (microphone or vibration sensor).

In step S32, the vibration information obtainment unit 51 cuts out the received vibration information (acoustic information) for a certain time (for example, see Fig. 7).

In step S33, the vibration information obtainment unit 51 carries out the short-time Fourier transform for the cut vibration information (acoustic information). Note that the short time denotes approximately 2 to 50 milliseconds, for example.

In step S34, the vibration information obtainment unit 51 outputs the result of the short-time Fourier transform as the three-dimensional information of the time, the frequency, and the vibration level (sound pressure level). Note that Fig. 8 illustrates the gray scale images in which the time is transformed to the width, the frequency is transformed to the height, and the vibration level (sound pressure level) is transformed to the brightness.

In step S35, the determination algorithm execution unit 52 inputs the three-dimensional information of the time, the frequency, and the vibration intensity (sound pressure intensity), which is obtained by the short-time Fourier transform, to an algorithm which is learned by machine learning. Note that the determination algorithm is updated by the determination algorithm generation unit 55 in each of the above predetermined periods, for example.

In step S36, the determination algorithm execution unit 52 classifies the input vibration information (acoustic information) by a machine learning algorithm (determination algorithm). In supervised machine learning, because the vibration information in various abnormal conditions in addition to the vibration information in the normal condition is learned by machine learning, classification is performed about which learned category the input three-dimensional information belongs to.

In step S37, in a case where the result of classification by the determination algorithm is a classification indicating an abnormality, the vibration information determination unit 53 determines that an abnormality is present. That is, in a case of supervised machine learning, because the numerical value is not output in step S36 but classification into kinds of normal and abnormal is performed, in an abnormal case, the vibration information determination unit 53 makes a simple determination based on an output result of classification (without a comparison with the predetermined threshold value or the like).

In step S38, the determination result notification unit 54 notifies the result output by the determination algorithm and the result of the determination by the vibration information determination unit 53. Note that the determination result notification unit 54 may notify the result of the determination by the vibration information determination unit 53 and may notify the result only in a case where the vibration information determination unit 53 determines that an abnormality is present.

### <Hardware Configuration Example>

Fig. 15 is a conceptual diagram illustrating a hardware configuration example of a processing circuit provided in the information processing device 50 according to the embodiment illustrated in Fig. 1 to Fig. 14. The above-described functions are realized by the processing circuit. As one form, the processing circuit includes at least one processor 91 and at least one memory 92. As another form, the processing circuit includes at least one piece of dedicated hardware 93.

In a case where the processing circuit includes the processor 91 and the memory 92, the functions are realized by software, firmware, or a combination of software and firmware. At least one of the software and the firmware is described as a program. At least one of the software and the firmware is stored in the memory 92. The processor 91 reads out and executes programs stored in the memory 92 and thereby realizes the functions.

In a case where the processing circuit includes the dedicated hardware 93, the processing circuit is a single circuit, a composite circuit, a processor formed as a program, or a combination of those, for example. The functions are realized by the processing circuit.

As for each of the functions provided in the information processing device 50, a part or the whole function may be configured with hardware or may be configured as a program to be executed by the processor. That is, the information processing device 50 is realizable with a computer and programs, and the programs are capable of being stored in a storage medium and of being provided through a network.

### <Operations and Effects of One Embodiment>

As described above, in the embodiment illustrated in Fig. 1 to Fig. 15, in the treatment water tank 20, an abnormality of or damage to the air diffuser 30 is detected based on the vibration information (acoustic information) produced by the bubbles formed in the treatment water W by air or oxygen released from the air diffuser 30. Accordingly, because the abnormal bubbling such as bubbling of the coarse bubbles B can be detected before the water quality of the treatment water W deteriorates, an abnormality of or damage to the air diffuser 30 can early be found. Further, accordingly, without draining the treatment water W of the aeration tank 20 or stopping an operation of the water treatment plant 10 for an inspection, an abnormality of or damage to the air diffuser 30 can be found.

Further, in the embodiment illustrated in Fig. 1 to Fig. 15, because an abnormality of or damage to the air diffuser 30 can early be found, deterioration of the water quality of the treatment water W in the treatment water tank 20 can be prevented. Accordingly, a backward flow of sludge to the other air diffuser 30 in the same system can be inhibited, and as a result, expansion of an abnormality of or damage to the air diffuser 30 can be inhibited.

Further, in the embodiment illustrated in Fig. 1 to Fig. 15, predetermined transform processing such as the short-time Fourier transform is performed for the vibration information (acoustic information) obtained from the vibration information collection device 40. Accordingly, it is possible to discriminate the time change in the vibration intensity (sound pressure intensity) at each frequency, which cannot be discriminated based on the raw vibration information (acoustic information).

Further, in the embodiment illustrated in Fig. 1 to Fig. 15, the processing based on the predetermined determination algorithm is executed for the vibration information (acoustic information) for which the predetermined transform processing has been performed, the abnormal bubbling and so forth are thereby found, and an abnormality of or damage to the air diffuser 30 is found. Accordingly, in an operation of the air diffuser 30, an abnormality of or damage to the air diffuser 30 can be detected by using a general-purpose computer.

Further, in the embodiment illustrated in Fig. 1 to Fig. 15, an abnormality of or damage to the air diffuser 30 is detected by the general-purpose computer, and the detection is notified. Accordingly, not a technical expert but an ordinary facility manager or the like can detect an abnormality of or damage to the air diffuser 30 in the operation of the air diffuser 30. Further, accordingly, even when the target water treatment plant 10 is in a remote location, by referring to the above notification, an abnormality of or damage to the air diffuser 30 can be detected without a technical expert or the like visiting the site.

Further, in the embodiment illustrated in Fig. 1 to Fig. 15, the determination algorithm generation unit 55 updates the determination algorithm for each of the above predetermined periods or for each of the above predetermined time ranges. Accordingly, even in a case where time periods or time ranges, which correspond to the seasonal water temperature change or the water quality change of sewage or waste water, are different or a case where the aeration tanks 20 or the sections of the aeration tank 20 are different, an abnormality of or damage to the air diffuser 30 can be detected based on an appropriate determination algorithm which is suitable for the target water treatment plant 10.

### <Supplementary Items to Embodiment>

In the foregoing, as for the embodiment illustrated in Fig. 1 to Fig. 15, descriptions are made about the processing by the information processing device 50 while the processing is divided into the processing example without machine learning which is illustrated in Fig. 12, the processing example by unsupervised machine learning which is illustrated in Fig. 13, and the processing example by supervised machine learning which is illustrated in Fig. 14, but this is not restrictive. The information processing device 50 may process a part or all of those which are combined in series or in parallel. Those pieces of processing are combined, and the combined processing can thereby provide each of operations and effects that are provided by each of the pieces of processing which have not yet been combined.

Further, in the embodiment illustrated in Fig. 1 to Fig. 15, as one form of the present disclosure, a description is made by raising the operation management support system 1 for the water treatment plant 10 as an example, but the present disclosure is also realizable as the information processing device 50 in the operation management support system 1 for the water treatment plant 10. Further, the present disclosure is also realizable as the operation management support method for the water treatment plant 10 or as an information processing method in the operation management support system 1 for the water treatment plant 10.

Further, the present disclosure is also realizable as an operation management support program for the water treatment plant 10, the operation management support program causing a computer to execute processing steps in the operation management support method for the water treatment plant 10. Alternatively, the present disclosure is also realizable as an information processing program which causes a computer to execute processing steps in an information processing method in the operation management support system 1 for the water treatment plant 10.

Further, the present disclosure is also realizable as a storage medium (non-transitory computer-readable medium) which stores the above operation management support program or information processing program. The operation management support program or the information processing program can be distributed by storing those programs in removable media or the like such as a CD (compact disc) or a DVD (digital versatile disc) and a USB (universal serial bus) memory, for example. Note that the operation management support program or the information processing program may be uploaded to a network via a network interface or the like which is provided in the information processing device 50 or the like and which is not illustrated or may be downloaded from a network and be stored in the memory 92 or the like.

The above detailed descriptions will make clear characteristics and advantages of the embodiment. It is intended that the claims encompass the above-described characteristics and advantages of the embodiment without departing from the spirit and scope of rights. Further, persons having ordinary skill in the technical field can easily conceive any improvement and change. Consequently, there is no intention to limit the scope of embodiments having inventiveness to the above-described embodiment, and embodiments can be based on proper improvements and equivalents included in the scope of the disclosure by the embodiment. Reference Signs List

1 operation management support system, 10 water treatment plant (sewage treatment or waste water treatment facility, sewage or waste water treatment plant), 11 air blower, 12 air supply pipe, 20 treatment water tank (aeration tank), 30 air diffuser, 40 vibration information collection device (microphone, vibration sensor), 50 information processing device, 51 vibration information obtainment unit, 52 determination algorithm execution unit, 53 vibration information determination unit
54 determination result notification unit, 55 determination algorithm generation unit, 91 processor, 92 memory, 93 hardware, A bubble, B coarse bubble (abnormal bubble), W treatment water

## Claims

1. An operation management support system for a water treatment plant, the operation management support system comprising:
an air supply pipe through which air or oxygen is delivered from an air blower;
an air diffuser which is connected to the air supply pipe and to which the air or the oxygen is supplied from the air supply pipe;
a treatment water tank in which the air diffuser is arranged in treatment water and the air or the oxygen is released into the water from the air diffuser;
a vibration information collection device that collects vibration information produced by bubbles which are formed in the water by the air or the oxygen, the air or the oxygen being released from the air diffuser, in the treatment water tank; and
an information processing device which performs predetermined information processing for the vibration information collected by the vibration information collection device, wherein
the information processing device includes
a vibration information obtainment unit which obtains the vibration information from the vibration information collection device and performs predetermined transform processing for the obtained vibration information,
a determination algorithm execution unit which executes processing based on a predetermined determination algorithm for the vibration information for which the predetermined transform processing is performed by the vibration information obtainment unit,
a vibration information determination unit which makes a determination about an abnormality of the air diffuser based on an output result output from the determination algorithm execution unit, and
a determination result notification unit which notifies a result of a determination by the vibration information determination unit.

2. The operation management support system for a water treatment plant according to claim 1, wherein
the vibration information collection device is arranged in a space in an upper portion of the treatment water in the treatment water tank.

3. The operation management support system for a water treatment plant according to claim 1, wherein
the vibration information collection device is arranged in the treatment water in the treatment water tank.

4. The operation management support system for a water treatment plant according to claim 1, wherein
the vibration information collection device is arranged to closely contact with or abut the air supply pipe.

5. The operation management support system for a water treatment plant according to any one of claims 1 to 4, wherein
the vibration information is acoustic information of a sound of a rising bubble in water, the sound being produced by the bubble, a bubble bursting sound, a water flow sound, a wave splash sound, or a combination sound of the sound of the rising bubble, the bubble bursting sound, the water flow sound, and the wave splash sound,
the vibration information collection device is a microphone which collects the acoustic information, and
the vibration information obtainment unit performs the predetermined transform processing for the acoustic information collected by the microphone.

6. The operation management support system for a water treatment plant according to any one of claims 1 to 4, wherein
the vibration information is vibration information of vibration by a rising bubble in water, the vibration being produced by the bubble, bubble bursting vibration, water flow vibration, wave splash vibration, or combination vibration of the vibration by the rising bubble, the bubble bursting vibration, the water flow vibration, and the wave splash vibration,
the vibration information collection device is a vibration sensor which collects the vibration information, and
the vibration information obtainment unit performs the predetermined transform processing for the vibration information collected by the vibration sensor.

7. The operation management support system for a water treatment plant according to any one of claims 1 to 6, wherein
the predetermined transform processing is a short-time Fourier transform in which the vibration information obtained by the vibration information obtainment unit is cut out for a predetermined time and which is performed for the cut vibration information.

8. The operation management support system for a water treatment plant according to any one of claims 1 to 7, wherein
the determination algorithm execution unit calculates an average, a standard deviation, or a coefficient of variation about a time change in a vibration intensity at each frequency for the vibration information, for which the predetermined transform processing is performed by the vibration information obtainment unit, and outputs a result of integration of a standard deviation or a coefficient of variation about frequencies in a predetermined range or all frequencies of recording, and
when a numerical value about the time change in the vibration intensity, the numerical value being output from the determination algorithm execution unit, is greater than a predetermined threshold value, the vibration information determination unit determines that an abnormality is present in the air diffuser.

9. The operation management support system for a water treatment plant according to any one of claims 1 to 7, wherein
the vibration information obtainment unit transforms the vibration information, for which the predetermined transform processing is performed, to three-dimensional information of a time, a frequency, and a vibration intensity,
the determination algorithm execution unit calculates a divergence degree between the three-dimensional information transformed by the vibration information obtainment unit and the three-dimensional information based on vibration information in a normal condition, the vibration information being learned in advance, and outputs the divergence degree, and
when a numerical value about the time change in the vibration intensity, the numerical value being output from the determination algorithm execution unit, is greater than a predetermined threshold value, the vibration information determination unit determines that an abnormality is present in the air diffuser.

10. The operation management support system for a water treatment plant according to claim 8 or 9, wherein
the predetermined threshold value is allowed to be different for each time period, each aeration tank, or each section of the aeration tank.

11. The operation management support system for a water treatment plant according to any one of claims 1 to 7, wherein
the vibration information obtainment unit transforms the vibration information, for which the predetermined transform processing is performed, to three-dimensional information of a time, a frequency, and a vibration intensity,
the determination algorithm execution unit classifies the three-dimensional information transformed by the vibration information obtainment unit based on the three-dimensional information based on vibration information which is learned in advance, and
when a result about a time change in the vibration intensity, the result being classified by the determination algorithm execution unit, is a classification indicating an abnormality of the air diffuser, the vibration information determination unit determines that an abnormality is present in the air diffuser.

12. The operation management support system for a water treatment plant according to any one of claims 1 to 11, further comprising
a determination algorithm generation unit which generates the predetermined determination algorithm based on the vibration information for which the predetermined transform processing is performed by the vibration information obtainment unit.

13. The operation management support system for a water treatment plant according to claim 12, wherein
the determination algorithm generation unit updates the predetermined determination algorithm for each predetermined period or each predetermined time range.

14. The operation management support system for a water treatment plant according to any one of claims 1 to 13, wherein
the determination result notification unit notifies the result of the determination by the vibration information determination unit to an outside of the information processing device by a display apparatus or an information processing terminal.

15. An operation management support method for a water treatment plant, wherein
in a water treatment plant that includes
an air supply pipe through which air or oxygen is delivered from an air blower,
an air diffuser which is connected to the air supply pipe and to which the air or the oxygen is supplied from the air supply pipe,
a treatment water tank in which the air diffuser is arranged in treatment water and the air or the oxygen is released into the water from the air diffuser, and
a vibration information collection device which collects vibration information produced by bubbles which are formed in the water by the air or the oxygen, the air or the oxygen being released from the air diffuser, in the treatment water tank,
the operation management support method comprises:
a vibration information obtainment step of obtaining the vibration information from the vibration information collection device and of performing predetermined transform processing for the obtained vibration information;
a determination algorithm execution step of executing processing based on a predetermined determination algorithm for the vibration information for which the predetermined transform processing is performed;
a vibration information determination step of making a determination about an abnormality of the air diffuser based on an output result output by the determination algorithm execution step; and
a determination result notification step of notifying a result of a determination by the vibration information determination step.
